# EUROPÄISCHE PATENTSCHRIFT

(11) **EP 0 715 090 B1**
(45) Veröffentlichungstag und Bekanntmachung des Hinweises auf die Patenterteilung: **31.05.2000**
(21) Anmeldenummer: 95118178.3
(22) Anmeldetag: 18.11.1995
(51) Int. Cl.: F16D 65/097, F16D 55/224

(54) **Niederhaltefeder für Scheibenbremse**
Retaining spring for disc brake
Ressort de maintien pour frein à disque

(30) Priorität: 01.12.1994 DE 4442796
(43) Veröffentlichungstag der Anmeldung: 05.06.1996
(73) Patentinhaber: Continental Teves AG & Co. oHG, 60488 Frankfurt (DE)
(72) Erfinder: Weiler, Rolf, D-65817 Eppstein (DE); Bach, Uwe, D-65527 Niedernhausen (DE)

(56) Entgegenhaltungen:
- DE-A- 1 927 459
- DE-A- 3 811 385
- GB-A- 2 243 887

## Beschreibung

Die Erfindung betrifft einen Bremssattel für Scheibenbremsen mit Niederhaltefeder gemäß dem Oberbegriff des Patentanspruchs 1.

Aus der DE 38 11 385 A1 ist ein derartiger Bremssattel mit Niederhaltefeder bekannt. Dabei ist die Niederhaltefeder für eine Scheibenbremse bestimmt, bei der zwei Bremsbeläge in einem Schacht eines Bremssattels angeordnet und mittels eines Haltestiftes befestigt sind. Die bekannte Niederhaltefeder besteht aus einem in der wesentlichen Grundform rechteckig gebogenen Federdraht, der sich einerseits am Haltestift und andererseits an der radial äußeren Schmalseite der Bremsbeläge abstützt. Dabei wird im wesentlichen nur eine radial nach innen gerichtete Kraft auf die Bremsbeläge ausgeübt. Aufgrund eines konstruktionsbedingten Spiels können sich die Bremsbeläge jedoch geringfügig auch in Umfangsrichtung bewegen und gegen die Wände des Schachtes klappern.

Aus der DE-A-19 27 459 ist weiterhin eine Scheibenbremse mit einer zugehörigen Niederhaltefederanordnung bekannt, bei der die beiden Bremsbeläge an zwei einen Schacht des Bremssattels überspannenden Haltestiften verschiebbar aufgenommen sind. Die Verwendung zweier Haltestifte erfordert im Bremsenbetrieb die klapperfreie Verspannung der Bremsbeläge gegenüber beiden Haltestiften sowie gegenüber den Schachtwänden des Bremssattels. Diese Mehrfachwirkung der Niederhaltefeder macht einen erhöhten konstruktiven Aufwand bei der Feder notwendig. Außerdem ist es bei einer derartigen Anordnung aufgrund der Toleranzverhältnisse schwierig, die geeigneten Federvorspannkräfte in den unterschiedlichen Richtungen zu dimensionieren.

Aufgabe der Erfindung ist es, einen Bremssattel mit Niederhaltefeder gemäß dem Oberbegriff des Patentanspruchs 1 zu verbessern, so daß ein Klappern der Bremsbeläge in jedem Fall wirkungsvoll verhindert wird.

Die Lösung der Aufgabe ergibt sich aus der Merkmalskombination des Patentanspruchs 1. Aufgrund der einfachen Gestaltung des Bremssattels sowie der erfindungsgemäßen Niederhaltefeder mit einem zentralen Abschnitt, der sich in Umfangsrichtung über der Bremsscheibe erstreckt und am Haltestift abgestützt ist, können die zum radialen Andruck der Bremsbeläge bestimmten Federarme auf einfachste Weise und kostengünstig ausgeformt werden. Besonders wichtig für die Lösung der Aufgabe ist aber die vom zentralen Abschnitt ausgehende Federzunge, die am Bremssattel abgestützt wird, um die Bremsbeläge durch ein zusätzliches Drehmoment in ihren Führungen und Halterungen klapperfrei zu verspannen.

Zur Erzeugung des genannten Drehmoments wird eine Ausführungsform gemäß Anspruch 3 empfohlen, bei der die Federzunge in radialer Richtung federnd am Bremssattel anliegt, vorzugsweise an einer radialen Anlagefläche, die gemäß Anspruch 4 durch eine Tasche in eine Wand des Schachtes eingeformt ist. Die Tasche wird auf einfache Weise ohne zusätzliche Fertigungskosten beim Gießen des Bremssattels miteingeformt.

In einer einfachen Ausführungsform gemäß Anspruch 2 wird die Niederhaltefeder aus einem Stück Federblech ausgestanzt und gebogen.

In einer bevorzugten Ausführungsform der Erfindung gemäß Anspruch 5 besitzt der Bremssattel Ausnehmungen, die gemäß Anspruch 6 auf einfache und kostengünstige Weise beim Gießen des Bremssattels eingeformt werden. Die Ausnehmungen sind zur Sicherung der Niederhaltefeder in ihrer wohldefinierten Einbaulage bestimmt. Wenn die Ausnehmungen gemäß Anspruch 7 nur auf der Bremsscheibeneinlaufseite axial paarweise gegenüberliegend angeordnet sind, kann die Niederhaltefeder nur in ihrer korrekten Lage eingebaut werden.

Um ein Klacken der Bremsbeläge in ihren Führungen bei Betätigung der Bremse weitgehend zu vermeiden, müssen die Bremsbeläge in Hauptdrehrichtung der Bremsscheibe bei Vorwärtsfahrt des Fahrzeugs an ihre Abstützflächen gedrückt werden. Dies leistet die Niederhaltefeder nur in der genannten und dargestellten korrekten Einbaulage. Eine falsche Einbaulage wird dadurch verhindert, daß im Bremsscheibenauslauf zumindest auf einer Axialseite des Schachtes keine Ausnehmung vorhanden ist.

Wegen der axialen Länge der Federarme, die über die Schachtbreite hinausragen, ist ein Einbau unmöglich, wenn nur eine Ausnehmung fehlt.

Die Erfindung wird noch verbessert durch die Maßnahmen des Anspruchs 8, die eine weitere Sicherung gegen Falscheinbau der Niederhaltefeder darstellen.

Ein Ausführungsbeispiel der Erfindung wird nachfolgend anhand der Zeichnungen näher erläutert.

Es zeigen:

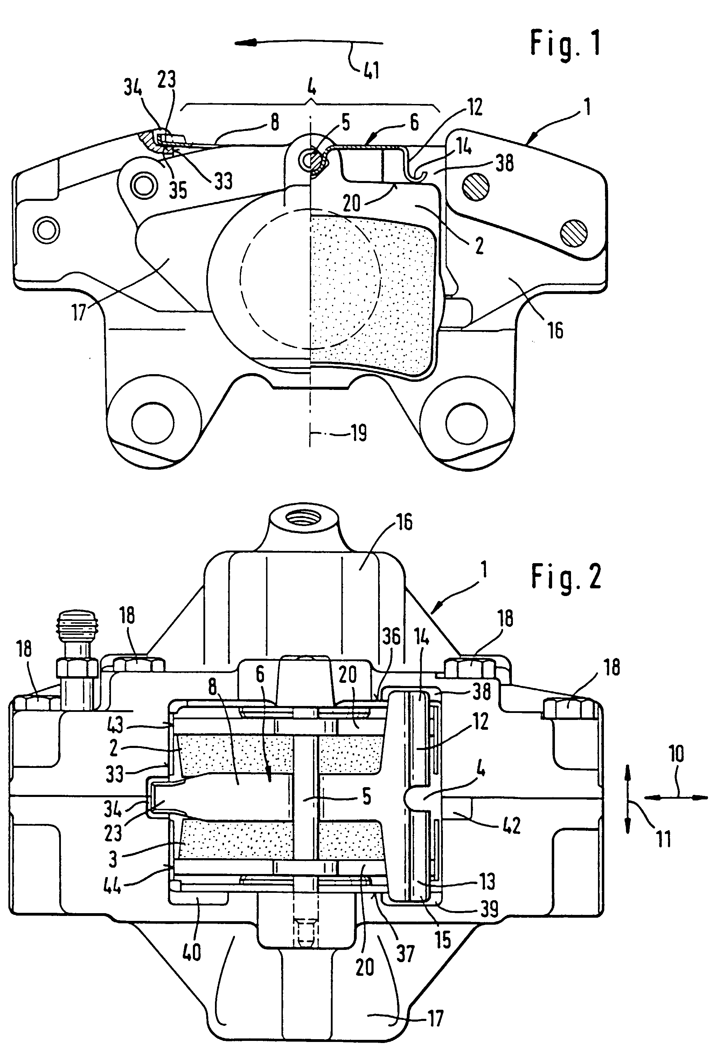

- Fig. 1: eine teilweise geschnittene Seitenansicht eines Bremssattels mit einer erfindungsgemäßen Niederhaltefeder,
- Fig. 2: eine Draufsicht auf denselben Bremssattel mit Niederhaltefeder,

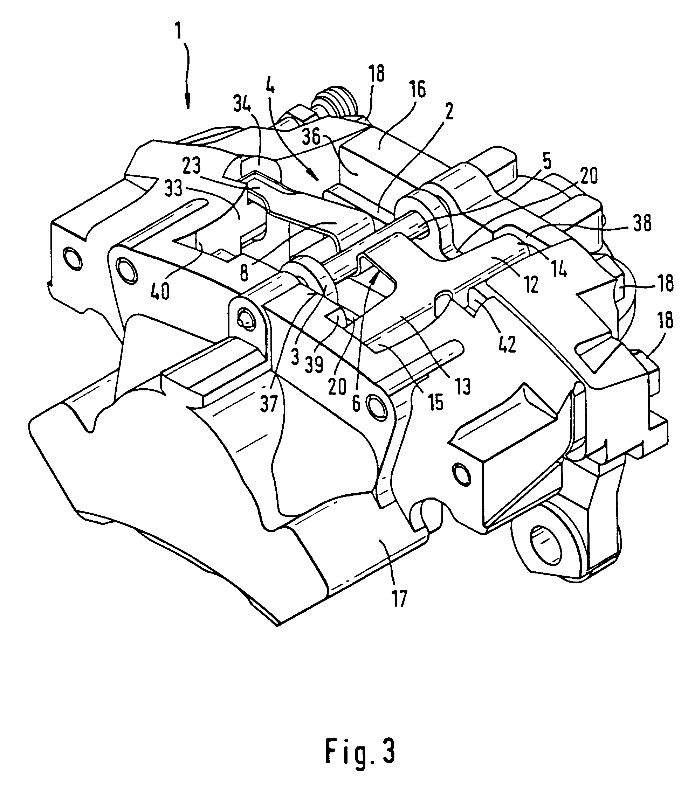

- Fig. 3: eine perspektivische Ansicht des Bremssattels mit Niederhaltefeder.

Ein Bremssattel 1 einer Festsattel-Scheibenbremse besitzt einen Schacht 4, in dem zwei Bremsbeläge 2, 3 angeordnet und mittels eines Haltestiftes 5 befestigt sind. Eine aus einem einzigen Stück Federblech bestehende Niederhaltefeder 6 besitzt einen zentralen Abschnitt 8, der sich im mittleren Bereich des Schachtes 4 in Umfangsrichtung 10 erstreckt und den Haltestift 5 im wesentlichen halbkreisförmig umschlingt. Vom zentralen Abschnitt 8 gehen zwei Federarme 12, 13 aus, die in entgegengesetzte Axialrichtungen 11 verlaufen und in Umfangsrichtung 10 im Abstand zu dem Haltestift 5 angeordnet sind. Die Federarme 12, 13 sind zur radial federnden Anlage an den radial äußeren Schmalseiten 20 der Bremsbeläge 2, 3 bestimmt. Weiterhin ist noch eine vom zentralen Abschnitt 8 ausgehende, zur Abstützung am Bremssattel 1 bestimmte Federzunge 23 vorgesehen.

In einer auf der Bremsscheibenauslaufseite bezogen auf die Hauptdrehrichtung 41 der Bremsscheibe liegenden Wand 33 des Schachtes 4 ist eine Tasche 34 ausgebildet, die eine radiale Anlagefläche 35 für die Anlage der Federzunge 23 aufweist. Die Federzunge 23 liegt in radialer Richtung federnd an der radialen Anlagefläche 35 an, um ein Drehmoment um die Achse des Haltestiftes 5 zu erzeugen. Das Drehmoment wird über die Federarme 12, 13 auf die Schmalseiten 20 der Bremsbeläge 2, 3 übertragen und drückt die Bremsbeläge gegen ihre bremsscheibenauslaufseitigen Abstützflächen 43, 44, um ein Klappern der Bremsbeläge 2, 3 in ihren Führungen gegenüber dem Bremssattel 1 zu verhindern.

Die axialseitigen Wände 36, 37 des Schachtes 4 sind mit Ausnehmungen 38, 39 versehen, in die die freien Enden 14, 15 der verlängerten Federarme 12, 13 hineinragen, ohne die Wände der Ausnehmungen 38, 39 zu berühren.

Der Bremssattel 1 besteht aus einem inneren Gehäuseteil 16 und einem äußeren Gehäuseteil 17, die mittels Schrauben 18 miteinander verbunden sind. Aus gießtechnischen Gründen ist das äußere Gehäuseteil 17 in bezug auf eine die Bremsscheibenachse und die Bremskolbenachse beinhaltende Mittelebene 19 symmetrisch ausgebildet. Beim Gießen der Gehäuseteile 16, 17 werden die axial gegenüberliegenden Ausnehmungen 38, 39 miteingeformt. Wegen der Symmetrie des äußeren Gehäuseteils 17 entsteht dabei eine weitere Ausnehmung 40, die aber keine Funktion hat.

Ein falscher Einbau der Niederhaltefeder 6, bei dem die beiden Federarme 12, 13 auf der Bremsscheibenauslaufseite in bezug auf die Hauptdrehrichtung 41 bei Vorwärtsfahrt des Fahrzeugs zu liegen kämen, wird durch das Fehlen einer der Ausnehmung 40 des äußeren Gehäuseteils 17 axial gegenüberliegenden Ausnehmung am inneren Gehäuseteil 16 verhindert. Zwar kann der eine Federarm 12 mit seinem freien Ende 14 in die Ausnehmung 40 hineinragen, jedoch ragt der andere Federarm 13 mit seinem freien Ende 15 über die axialseitige Wand 36 des Gehäuseteils 16 hinaus, da das freie Ende 15 wegen der fehlenden Ausnehmung keinen Einbauraum findet. In diesem Fall kann der Haltestift 5 nicht montiert werden.

Eine weitere Sicherung gegen Falscheinbau der Niederhaltefeder 6 ist durch die Anordnung und Form der Tasche 34 gegeben. Die Tasche 34 ist auf der Bremsscheibenauslaufseite angeordnet und gerade so breit, daß die Federzunge 23 Aufnahme findet. Wegen der Symmetrie des äußeren Gehäuseteils 17 befindet sich auch auf der Bremsscheibeneinlaufseite eine Halbtasche 42, die jedoch wegen ihrer geringen axialen Breite nicht zur Aufnahme der Federzunge 23 geeignet ist.

## Patentansprüche

1. Bremssattel (1) für Scheibenbremsen, mit einem Schacht (4), in dem zwei Bremsbeläge (2, 3) angeordnet und mittels eines Haltestiftes (5) befestigt sind, und mit einer Niederhaltefeder (6), die einen sich im mittleren Bereich des Schachtes (4) in Umfangsrichtung sich erstreckenden zentralen Abschnitt (8) sowie zwei vom zentralen Abschnitt (8) ausgehende, in entgegengesetzte Axialrichtungen (11) verlaufende Federarme (12, 13) aufweist, die in Umfangsrichtung (10) im Abstand zum Haltestift (5) angeordnet sind, **dadurch gekennzeichnet**, daß die Niederhaltefeder (6) im wesentlichen T-förmig ausgestaltet ist und den Haltestift (5) mit dem zentralen Abschnitt (8) im wesentlichen halbkreisförmig umschließt, daß die zwei Federarme (12, 13) zur radial federnden Anlage an den radial äußeren Schmalseiten (20) der Bremsbeläge (2, 3) bestimmt sind, und daß die Niederhaltefeder (6) eine vom zentralen Abschnitt (8) in Umfangsrichtung (10) ausgehende, zur Abstützung am Bremssattel (1) bestimmte Federzunge (23) aufweist.

2. Bremssattel nach Anspruch 1, **dadurch gekennzeichnet**, daß die Niederhaltefeder (6) einstückig aus Federblech gestanzt und gebogen ist.

3. Bremssattel nach Anspruch 1 oder 2, **dadurch gekennzeichnet**, daß die Federzunge (23) in radialer Richtung federnd am Bremssattel (1) anliegt, um ein Drehmoment um die Achse des Haltestiftes (5) zu erzeugen.

4. Bremssattel nach Anspruch 3, **dadurch gekennzeichnet**, daß in einer Wand (33) des Schachtes (4) eine Tasche (34) ausgebildet ist, die eine radiale Anlagefläche (35) für die Anlage der Federzunge (23) aufweist.

5. Bremssattel nach Anspruch 3 oder 4, **dadurch gekennzeichnet**, daß die axialseitigen Wände (36, 37) des Schachtes (4) mit Ausnehmungen (38, 39) versehen sind, in die die freien Enden (14, 15) der verlängerten Federarme (12, 13) hineinragen.

6. Bremssattel nach Anspruch 5, **dadurch gekennzeichnet**, daß die Ausnehmungen (38, 39) beim Gießen des Bremssattels (1) eingeformt sind.

7. Bremssattel nach Anspruch 5 oder 6, **dadurch gekennzeichnet**, daß zwei axial gegenüberliegende Ausnehmungen (38, 39) nur in dem bremsscheibeneinlaufseitigen Randbereich des Schachtes (4) angeordnet sind.

8. Bremssattel nach Anspruch 7**, dadurch gekennzeichnet**, daß eine zur Aufnahme der Federzunge (23) geeignete Tasche (34) nur in der bremscheibenauslaufseitigen Wand (33) des Schachtes (4) angeordnet ist.

## Claims

1. Brake caliper (1) for disc brakes, including an aperture (4) in which two brake pads (2, 3) are arranged and secured by means of a retaining pin (5), and including a hold-down spring (6) which has a central portion (8) that extends in the mid-portion of the aperture (4) in a circumferential direction, as well as two spring arms (12, 13) which extend from the central portion (8) in opposite axial directions (11), the spring arms being spaced from the retaining pin (5) in a circumferential direction (10),
**characterized** in that the hold-down spring (6) has a generally T-shaped configuration and substantially semicircularly encompasses the retaining pin (5) with the central portion (8), in that the two spring arms (12, 13) are intended for the radially resilient abutment on the radially outward narrow sides (20) of the brake pads (2, 3), and in that the hold-down spring (6) has a resilient tongue (23) which extends from the central portion (8) in a circumferential direction (10) and is intended for the support on the brake caliper (1).

2. Brake caliper as claimed in claim 1,
**characterized** in that the hold-down spring (6) is punched from one piece of spring plate and bent.

3. Brake caliper as claimed in claim 1 or claim 2,
**characterized** in that the resilient tongue (23), in a radial direction, is in resilient abutment with the brake caliper (1) to produce a torque about the axis of the retaining pin (5).

4. Brake caliper as claimed in claim 3,
**characterized** in that a pocket (34) is shaped in a wall (33) of the aperture (4), the pocket having a radial abutment surface (35) for abutment of the resilient tongue (23).

5. Brake caliper as claimed in claim 3 or claim 4,
**characterized** in that the axial-side walls (36, 37) of the aperture (4) have recesses (38, 39) into which the free ends (14, 15) of the extended spring arms (12, 13) project.

6. Brake caliper as claimed in claim 5,
**characterized** in that the recesses (38, 39) are shaped during casting of the brake caliper (1).

7. Brake caliper as claimed in claim 5 or claim 6,
**characterized** in that two recesses (38, 39) which are arranged axially opposite each other are arranged only in the fringe area of the aperture (4) which is on the brake disc entry side.

8. Brake caliper as claimed in claim 7,
**characterized** in that a pocket (34) which is suitable for accommodation of the resilient tongue (23) is arranged only in the wall (33) of the aperture (4) on the brake disc exit side.

## Revendications

1. Etrier (1) pour freins à disque, comportant un puits (4) dans lequel deux garnitures de freins (2, 3) sont agencées et sont fixées au moyen d'une goupille de fixation (5), et un ressort de maintien (6), qui présente une section centrale (8) s'étendant dans la partie centrale du puits (4) dans la direction périphérique ainsi que deux bras de ressort (12, 13) faisant saillie à partir de la section centrale (8) et s'étendant dans les directions axiales opposées (11), lesdits bras étant agencés dans la direction périphérique (10) à distance de la goupille de fixation (5), caractérisé en ce que le ressort de maintien (6) se présente sous une forme sensible en T et la section centrale entoure la goupille de fixation (5) avec la section centrale (8) sensiblement selon un demi-cercle, en ce que les deux bras de ressort (12, 13) sont destinés à l'appui élastique radial sur les petits côtés extérieurs radiaux (20) des garnitures de frein (2, 3), et en ce que le ressort de maintien (6) présente une languette de ressort (23) prolongeant la section centrale (8) dans la direction périphérique (10) et destinée à s'appuyer sur l'étrier (1).

2. Etrier selon la revendication 1, caractérisé en ce que le ressort de maintien (6) est découpé d'une seule pièce dans une tôle élastique et est plié.

3. Etrier selon la revendication 1 ou 2, caractérisé en ce que la languette de ressort (23) s'applique dans la direction radiale de manière élastique sur l'étrier (1) pour produire un moment de rotation autour de l'axe de la goupille de fixation (5).

4. Etrier selon la revendication 3, caractérisé en ce que, dans une paroi (33) du puits (4), est formée une poche (34) qui présente une surface d'appui radiale (35) pour l'appui de la languette de ressort (23).

5. Etrier selon la revendication 3 ou 4, caractérisé en ce que les parois latérales axiales (36, 37) du puits (4) sont pourvues d'évidements (38, 39), dans lesquels les extrémités libres (14, 15) des bras de ressort prolongés (12, 13) font saillie.

6. Etrier selon la revendication 5, caractérisé en ce que les évidements (38, 39) sont formés d'une seule pièce lors de la coulée de l'étrier (1).

7. Etrier selon la revendication 5 ou 6, caractérisé en ce que deux évidements axialement opposés (38, 39) ne sont agencés que dans la zone de bord, côté entrée du disque de frein, du puits (4).

8. Etrier selon la revendication 7, caractérisé en ce qu'une poche (34) pour la réception de la languette de ressort (23) n'est agencée que dans la paroi (33) du puits (4) côté sortie du disque de frein.
